# FASCICULE DE BREVET EUROPEEN

(11) **EP 2 516 107 B1**
(45) Date de publication et mention de la délivrance du brevet: **06.07.2016**
(21) Numéro de dépôt: 10798095.5
(22) Date de dépôt: 22.12.2010
(51) Int. Cl.: B23P 15/04, F01D 5/14, F04D 29/38, B29C 67/00, B22F 3/105

(54) **PROCEDE DE REALISATION D'UN RENFORT METALLIQUE D'AUBE DE TURBOMACHINE**
VERFAHREN ZUR HERSTELLUNG EINER METALLVERSTÄRKUNG FÜR EIN TURBINENMOTORBLATT
METHOD FOR CREATING METAL REINFORCEMENT FOR A TURBINE ENGINE BLADE

(30) Priorité: 23.12.2009 FR 0959551
(43) Date de publication de la demande: 31.10.2012
(73) Titulaire: Snecma, 75015 Paris (FR)
(72) Inventeur: FLESCH, Thierry, Jean, Emile, F-77310 Pringy (FR); FROMENTIN, Jean-François, F-77240 Cesson La Forêt (FR); LEVEQUE, Stéphane André, F-91300 Massy (FR); SANCHEZ, Laetitia, F-77390 Crisenoy (FR)
(74) Mandataire: Lebkiri, Alexandre
(86) Numéro de dépôt international: PCT/EP2010/070576
(87) Numéro de publication internationale: WO 2011/076890

(56) Documents cités:
- EP-A1- 1 489 264
- EP-A1- 1 574 270
- FR-A1- 2 319 008
- JP-A- 61 164 002
- RU-C2- 2 297 538
- US-A- 3 430 898
- US-A1- 2007 163 114

## Description

La présente invention concerne un procédé de réalisation d'un renfort métallique d'aube composite ou métallique de turbomachine selon le préambule de la revendication 1.

Plus particulièrement l'invention concerne un procédé de réalisation d'un renfort métallique de bord d'attaque d'aube de turbomachine.

Le domaine de l'invention est celui des turbomachines et plus particulièrement celui des aubes de soufflante, en matériau composite ou métallique, de turbomachine et dont le bord d'attaque comporte un renfort structurel métallique.

Toutefois, l'invention est également applicable à la réalisation d'un renfort métallique destiné à renforcer un bord de fuite d'aube de turbomachine.

On rappelle que le bord d'attaque correspond à la partie antérieure d'un profil aérodynamique qui fait face au flux d'air et qui divise l'écoulement d'air en un écoulement d'air d'intrados et en un écoulement d'air extrados. Le bord de fuite correspond à la partie postérieure d'un profil aérodynamique où se rejoignent les écoulements intrados et extrados.

Il est connu d'équiper les aubes de soufflante d'une turbomachine, réalisées en matériaux composites, d'un renfort structurel métallique s'étendant sur toute la hauteur de l'aube et au-delà de leur bord d'attaque comme mentionné dans le document EP1908919. Un tel renfort permet de protéger l'aubage composite lors d'un impact d'un corps étranger sur la soufflante, tel que par exemple un oiseau, de la grêle ou encore des cailloux.

En particulier, le renfort structurel métallique protège le bord d'attaque de l'aube composite en évitant des risques de délamination, de rupture de fibre ou encore d'endommagement par décohésion fibre/matrice.

De façon classique, une aube de turbomachine comporte une surface aérodynamique s'étendant, selon une première direction, entre un bord d'attaque et un bord de fuite et, selon une deuxième direction sensiblement perpendiculaire à la première direction, entre un pied et un sommet de l'aube. Le renfort structurel métallique épouse la forme du bord d'attaque de la surface aérodynamique de l'aube et s'étend selon la première direction au-delà du bord d'attaque de la surface aérodynamique de l'aube pour épouser le profil de l'intrados et de l'extrados de l'aube et selon la deuxième direction entre le pied et le sommet de l'aube.

De façon connue, le renfort structurel métallique est une pièce métallique réalisée entièrement par fraisage à partir d'un bloc de matière.

Il est également connu de fabriquer le renfort structurel métallique à partir de plusieurs éléments comme décrit dans le document RU2297538 qui décrit le préambule de la revendication 1.

Cependant, le renfort métallique d'un bord d'attaque d'aube est une pièce complexe à réaliser, nécessitant de nombreuses opérations de reprises et des outillages complexes impliquant des coûts de réalisation importants.

Dans ce contexte, l'invention vise à résoudre les problèmes mentionnés ci-dessus en proposant un procédé de réalisation d'un renfort métallique de bord d'attaque ou de bord de fuite d'aube de turbomachine permettant de réduire significativement les coûts de réalisation d'une telle pièce et de simplifier la gamme de fabrication.

A cette fin, l'invention propose un procédé de réalisation d'un renfort métallique de bord d'attaque, ou de bord de fuite, d'aube de turbomachine comportant un pied de renfort et une tête de renfort, à partir d'une pluralité d'éléments formant différents secteurs dudit renfort métallique de sorte que ledit renfort métallique est divisé en plusieurs secteurs répartis entre ledit pied et ladite tête, ledit procédé étant caractérisé en ce qu'il comporte successivement :
- une étape de réalisation d'une pluralité d'éléments effilés en forme de V ;
- une étape de positionnement desdits secteurs sur un outillage reprenant la forme dudit bord d'attaque ou dudit bord de fuite de ladite aube de turbomachine ;
- une étape de solidarisation des différents secteurs de façon à former ledit profil complet dudit renfort métallique monobloc par recombinaison des différents secteurs.

Grâce à l'invention, le renfort structurel métallique est réalisé de façon simple et rapide à partir d'une pluralité de secteurs qui sont ensuite solidarisés de façon à former un renfort complet monobloc. La réalisation du renfort métallique par la recombinaison de plusieurs secteurs réalisés indépendamment permet d'éviter les dérives liées à la fabrication monobloc d'une telle pièce, et notamment au niveau des flancs minces du renfort qui ont tendance à vriller. En effet, l'étape de réalisation de plusieurs secteurs du renfort permet de limiter les contraintes emmagasinées dans la pièce lors du procédé de fabrication et ainsi la déformation des flancs à paroi mince lors du retrait de la pièce de l'outillage.

Ce procédé de réalisation permet ainsi de s'affranchir de la réalisation complexe du renfort par fraisage dans la masse à partir de méplats monoblocs nécessitant de grand volume de matière de mise en oeuvre et par conséquent des coûts importants en approvisionnement de matière première. Le procédé selon l'invention permet également de diminuer sensiblement les coûts de fabrication d'une telle pièce.

Le procédé de réalisation d'un renfort métallique d'aube de turbomachine selon l'invention peut également présenter une ou plusieurs des caractéristiques ci-dessous, considérées individuellement ou selon toutes les combinaisons techniquement possibles :
- lors de ladite étape de réalisation d'une pluralité d'éléments formant lesdits secteurs dudit renfort métallique, chaque secteur est réalisé au moyen d'un procédé de fusion laser ;
- ladite étape de solidarisation des différents secteurs est réalisée au moyen d'un procédé de brasage diffusion ;
- le procédé comporte une étape de conformation à chaud réalisée simultanément avec ladite étape de solidarisation ;
- le procédé comporte une étape de démoulage dudit renfort métallique dudit outillage, ledit outillage étant formé par une pluralité de sections amovibles, ledit démoulage étant opéré par le retrait successif desdites sections amovibles ;
- le procédé comporte une étape de finition dudit renfort métallique: consistant en une sous-étape de polissage de la surface dudit renfort et/ou en une sous-étape de reprise des flancs dudit renfort ;
- ladite étape de solidarisation des différents secteurs est réalisée au moyen d'un procédé de soudage ; dans ce cas, avantageusement, ladite étape de solidarisation des différents secteurs est suivie successivement par :
   - une étape de positionnement desdits secteurs solidarisés formant ledit renfort sur un outillage reprenant la forme dudit bord d'attaque ou dudit bord de fuite de ladite aube de turbomachine ;
   - une étape de traitement thermique de relaxation des contraintes ;
   - une étape de conformation à chaud ;
   - une étape de démoulage dudit renfort métallique dudit outillage, ledit outillage étant formé par une pluralité de sections amovibles réparties entre ledit pied et ladite tête dudit renfort ;
   - une étape de finition dudit renfort métallique consistant en une sous-étape de polissage de la surface dudit renfort et/ou en une sous-étape de reprise des flancs dudit renfort.,

**L'invention a également pour objet un** procédé de réparation d'une aube de turbomachine comportant un renfort métallique usagé du bord d'attaque ou du bord de fuite de ladite aube **selon la revendication 9, comportant** :
- une étape de désolidarisation dudit renfort métallique usagé de ladite aube ;
- une étape de réalisation d'un renfort métallique de bord d'attaque ou de bord de fuite d'aube de turbomachine selon l'invention,
- une étape de solidarisation dudit renfort métallique, réalisé lors de l'étape précédente, sur ladite aube de turbomachine.

L'invention a également pour objet un outillage pour la mise en oeuvre du procédé de réalisation d'un renfort métallique d'aube de turbomachine selon l'invention comportant une pluralité de sections amovibles, le nombre de sections amovibles étant supérieur au nombre de secteurs du renfort.

L'outillage selon l'invention peut également présenter une ou plusieurs des caractéristiques ci-dessous, considérées individuellement ou selon toutes les combinaisons techniquement possibles :
- ledit outillage est réalisé dans un matériau comportant un coefficient de dilatation supérieur au coefficient de dilatation du matériau dudit renfort.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue latérale d'une aube comportant un renfort structurel métallique de bord d'attaque obtenu au moyen du procédé de réalisation, selon l'invention ;
- la figure 2 est une vue partielle en coupe de la figure 1 selon un plan de coupe AA ;
- la figure 3 est un schéma synoptique présentant les principales étapes de réalisation d'un renfort structurel métallique de bord d'attaque d'aube de turbomachine du procédé de réalisation selon l'invention ;
- la figure 4 est une vue du renfort métallique de bord d'attaque d'aube de turbomachine lors de la première étape du procédé illustré en figure 3 ;
- la figure 5 est une vue du renfort métallique de bord d'attaque d'aube de turbomachine lors de la deuxième étape du procédé illustré en figure 3 ;
- la figure 6 est une vue du renfort métallique de bord d'attaque d'aube de turbomachine dans son état final obtenu par le procédé de réalisation selon l'invention illustré en figure 3.

Dans toutes les figures, les éléments communs portent les mêmes numéros de référence sauf précision contraire.

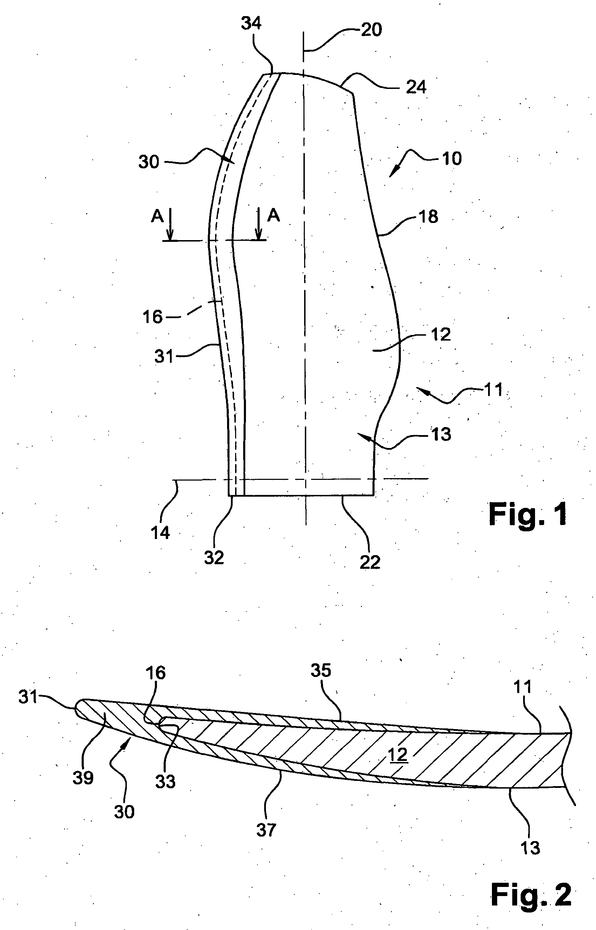

La figure 1 est une vue latérale d'une aube comportant un renfort structurel métallique de bord d'attaque obtenu au moyen du procédé de réalisation selon l'invention.

L'aube 10 illustrée est par exemple une aube mobile de soufflante d'une turbomachine (non représentée).

L'aube 10 comporte une surface aérodynamique 12 s'étendant selon une première direction axiale 14 entre un bord d'attaque 16 et un bord de fuite 18 et selon une deuxième direction radiale 20 sensiblement perpendiculaire à la première direction 14 entre un pied 22 et un sommet 24.

La surface aérodynamique 12 forme la face extrados 13 et intrados 11 de l'aube 10, la face extrados 13 de l'aube 10 étant représentée sur la figure 1. L'intrados 11 et l'extrados 13 forment les faces latérales de l'aube 10 qui relient le bord d'attaque 16 au bord de fuite 18 de l'aube 10.

Dans ce mode de réalisation, l'aube 10 est une aube composite obtenue typiquement par drapage d'un matériau composite tissé. A titre d'exemple, le matériau composite utilisé peut être composé par un assemblage de fibres de carbone tissées et d'une matrice résineuse, l'ensemble étant formé par moulage au moyen d'un procédé d'injection de résine sous vide de type RTM (pour « Resin Transfer Molding »).

L'aube 10 comporte un renfort structurel métallique 30 collé au niveau de son bord d'attaque 16 et qui s'étend à la fois selon la première direction 14 au-delà du bord d'attaque 16 de la surface aérodynamique 12 de l'aube 10 et selon la deuxième direction 20 entre le pied 22 et le sommet 24 de l'aube.

Comme représenté à la figure 2, le renfort structurel 30 épouse la forme du bord d'attaque 16 de la surface aérodynamique 12 de l'aube 10 qu'il prolonge pour former un bord d'attaque 31, dit bord d'attaque du renfort.

De façon classique, le renfort structurel 30 est une pièce monobloc comportant une section sensiblement en forme de V présentant une base 39 formant le bord d'attaque 31 et prolongée par deux flancs latéraux 35 et 37 épousant respectivement l'intrados 11 et extrados 13 de la surface aérodynamique 12 de l'aube. Les flancs 35, 37 présentent un profil effilé ou amincie en direction du bord de fuite de l'aube.

La base 39 comporte un profil interne 33 arrondi apte à épouser la forme arrondie du bord d'attaque 16 de l'aube 10.

Le renfort structurel 30 est métallique et préférentiellement à base titane. Ce matériau présente en effet une grande capacité d'absorption de l'énergie due aux chocs. Le renfort est collé sur l'aube 10 au moyen de colle connue de l'homme du métier, comme par exemple une colle cyanoacrylique ou encore époxy.

Ce type de renfort structurel métallique 30 utilisé pour le renfort d'aube composite de turbomachine est plus particulièrement décrit notamment dans la demande de brevet EP1908919.

Le procédé selon l'invention permet de réaliser un renfort structurel tel qu'illustré aux figures 1, 2 et 6, les figures 2 et 6 illustrant le renfort 30 dans son état final.

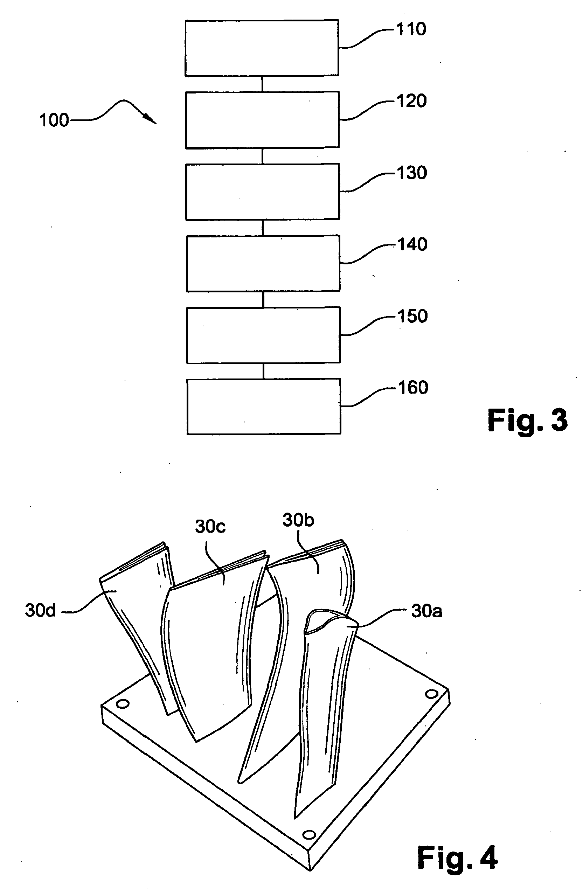

La figure 3 représente un schéma synoptique illustrant les principales étapes d'un procédé de réalisation 100 d'un renfort structurel métallique 30 de bord d'attaque d'aube 10 tel qu'illustré aux figures 1 et 2.

La première étape 110 du procédé de réalisation 100 est une étape de réalisation de plusieurs secteurs 30a, 30b, 30c, 30d du renfort métallique 30.

La figure 4 illustre particulièrement les différents secteurs 30a, 30b, 30c, 30d obtenus lors de la première étape 110.

A cet effet, le renfort métallique 30 est préalablement divisé en plusieurs secteurs lors de la conception ou lors de la construction d'un modèle numérique.

Selon un mode avantageux de l'invention, les différents secteurs du renfort 30 sont réalisés indépendamment par un procédé de prototypage rapide, et plus particulièrement au moyen d'un procédé de fusion laser. En effet, la fusion laser est un procédé qui permet de réaliser chaque secteur du renfort 30 par le dépôt de plusieurs couches de matière successives, ce qui permet de créer facilement des formes complexes et notamment la forme effilé en V du renfort métallique 30 avec de faibles épaisseurs au niveau des flancs 35, 37.

Le procédé de fusion laser ou procédé de frittage par fusion laser est un procédé connu de l'homme du métier et traité dans de nombreux brevets, comme notamment les brevets EP2060343 ou EP2125339 ; par conséquent nous ne décrirons pas plus en détails le principe de fonctionnement de ce procédé de fabrication.

La réalisation du renfort métallique 30 par la recombinaison de plusieurs secteurs 30a, 30b, 30c, 30d permet d'éviter les dérives liées à la fabrication d'une telle pièce d'un seul tenant à partir d'un méplat monobloc, et notamment au vrillage des flancs 35, 37 de faible épaisseur.

Chaque secteur 30a, 30b, 30c, 30d, réalisé dans la première étape 110, forme une partie de la base 39, du bord d'attaque 31 et des flancs 35, 37 du renfort 30 final.

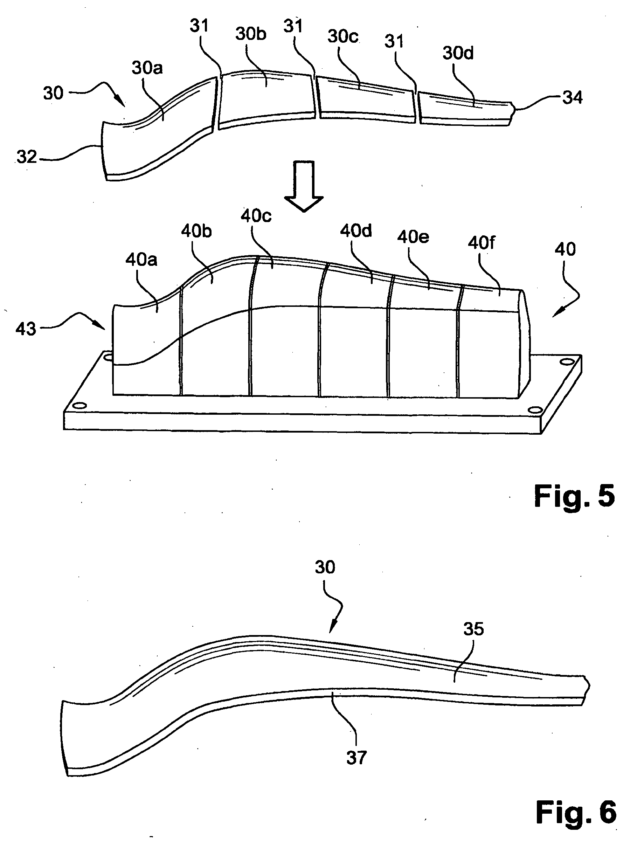

La deuxième étape 120 du procédé de réalisation 100 est une étape de positionnement des différents secteurs 30a, 30b, 30c, 30d sur un outillage spécifique de forme 40 en vue de la recombinaison. Cette deuxième étape 120 de positionnement est illustrée par la figure 5.

L'outillage 40 est formé par l'association de plusieurs sections 40a, 40b, 40c, 40d, 40e, 40f qui coopèrent ensemble de façon à former une empreinte 43 complémentaire du profil interne 33 du renfort 30. L'empreinte 43 de l'outillage 40 correspondant sensiblement au profil de l'aube 10 lorsque les différentes sections 40b, 40c, 40d, 40e, 40f sont assemblées.

Ainsi lors de cette deuxième étape, les différents secteurs 30a, 30b, 30c, 30d du renfort 30 sont positionnés secteur par secteur sur l'outillage 40 de façon construire entièrement le profil du renfort sur l'outillage. La forme de l'outillage 40, et notamment le profil de l'empreinte 43 sont réalisés de façon à former le galbe et le profil intrados et extrados désirés du renfort métallique 30.

L'outillage 40 comporte un nombre de sections supérieur au nombre de secteurs du renfort 30.

La troisième étape 130 du procédé de réalisation 100 est une étape d'assemblage, ou de solidarisation, des différents secteurs 30a, 30b, 30c, 30d du renfort 30 par un procédé de brasage diffusion. Pour ce faire, les jointures 31 présentes entre chaque secteur 30a, 30b, 30c, 30d accolé sont comblées par des cordons de brasure obtenus par brasage diffusion à partir d'un métal d'apport sous forme de feuillard ou sous forme de poudre. Ce métal d'apport permet de solidariser les différents secteurs 30a, 30b, 30c, 30d afin de former un renfort 30 monobloc avec son profil final.

On rappel que le brasage diffusion est une opération consistant à faire migrer totalement le métal d'apport dans le matériau de base jusqu'à la disparition de la partie métal d'apport fondu.

Le brasage diffusion permet notamment d'obtenir d'excellents résultats pour l'assemblage de pièces usinées relativement petites et aux profils complexes.

La quatrième étape 140 du procédé de réalisation 100 est une étape de conformation à chaud réalisée dans le même outillage de forme 40 que dans les étapes précédentes, l'outillage étant placé ensuite dans un four chauffé à la température de forgeage du matériau utilisé.

Cette étape de conformation à chaud permet de conformer le renfort 30 en vue d'obtenir sa forme finale.

De façon préférentielle, l'outillage 40 est réalisé dans un matériau comportant un coefficient de dilatation supérieur au coefficient de dilatation du matériau du renfort. A titre d'exemple, l'outillage 40 peut être réalisé en acier lorsque le renfort est réalisé à base titane. Le profil de l'outillage 40 et les dimensions de l'outillage 40 sont conçus en tenant compte du retrait des différents matériaux utilisés.

Selon un mode préférentiel de l'invention, l'étape 140 de conformation à chaud est réalisée lors de l'étape de brasage diffusion 130.

La cinquième étape 150 est une étape de démoulage dudit renfort 30 de l'outillage 40. A cet effet, les différentes sections 40a, 40b, 40c, 40d, 40e, 40f de l'outillage 40 sont amovibles et aptes à se démonter individuellement de façon à faciliter le démoulage du renfort 30.

Afin de faciliter le démoulage, il est possible de préparer initialement l'outillage 40 en déposant une couche de protection sur l'empreinte 43 de l'outillage 40 de façon à éviter que le renfort 30 ne colle sur l'outillage 40. A titre d'exemple, cette couche de protection peut être une couche d'alumine.

Enfin, la sixième étape 160 du procédé de réalisation 100 est une étape de finition et de reprise du renfort 30 par usinage. Cette étape de finition 160 consiste notamment :
- à la reprise des flancs 35, 37 ; cette étape consistant notamment au détourage des flancs 35, 37 et à l'amincissement des flancs intrados et extrados 35, 37 ;
- au polissage du renfort 30 afin d'obtenir l'état de surface requis.

La figure 6 illustre le renfort 30 dans son état final obtenu par le procédé de réalisation selon l'invention.

En association avec ces principales étapes de réalisation, le procédé selon l'invention peut également comporter des étapes de contrôle non destructif du renfort 30 permettant de s'assurer de la conformité géométrique et métallurgique de l'ensemble obtenu. A titre d'exemple les contrôles non destructifs peuvent être réalisés par un procédé par rayon X.

Selon un deuxième mode de réalisation de l'invention, l'étape d'assemblage, ou de solidarisation, des différents renforts par brasage diffusion est remplacée par une étape d'assemblage des différents renforts par soudage, par exemple au moyen d'un faisceau d'électrons:

Dans ce deuxième mode de réalisation, l'étape d'assemblage par soudage est réalisée sans l'utilisation d'un outillage de forme. Cette étape intervient à la suite de l'étape de réalisation des différents secteurs du renfort.

Ainsi dans ce deuxième mode de réalisation, le procédé de réalisation d'un renfort structurel métallique 30 de bord d'attaque d'aube 10 tel qu'illustré aux figures 1 et 2 comporte :
- une première étape de réalisation de plusieurs secteurs 30a, 30b, 30c, 30d du renfort métallique, par exemple par un procédé de fusion laser ;
- une deuxième étape d'assemblage par soudage des différents secteurs 30a, 30b, 30c, 30d constituant les différentes parties du renfort ;
- une troisième étape de positionnement desdits secteurs 30a, 30b, 30c, 30d solidarisés ensemble sur un outillage formant l'empreinte interne du renfort et comportant le profil du bord d'attaque de l'aube de turbomachine ;
- une quatrième étape de traitement thermique de relaxation des contraintes;
- une cinquième étape de conformation à chaud ;
- une sixième étape de démoulage du renfort métallique 30 de l'outillage, l'outillage étant divisé en différentes sections amovibles de façon à faciliter le démoulage du renfort 30 ;
- une étape de finition du renfort métallique 30 consistant en une sous-étape de polissage de la surface du renfort et/ou en une sous-étape de reprise des flancs du renfort 30.

Le procédé selon l'invention a été décrit principalement pour un renfort structurel métallique à base titane; toutefois, le procédé selon l'invention est également applicable avec des matériaux à base nickel ou encore à base acier.

L'invention a été particulièrement décrite pour la réalisation d'un renfort métallique d'une aube composite de turbomachine ; toutefois, l'invention est également applicable pour la réalisation d'un renfort métallique d'une aube métallique de turbomachine.

L'invention a été particulièrement décrite pour la réalisation d'un renfort métallique d'un bord d'attaque d'aube de turbomachine ; toutefois, l'invention est également applicable pour la réalisation d'un renfort métallique d'un bord de fuite d'une aube de turbomachine.

L'invention a été particulièrement décrite avec un procédé de fusion laser pour la réalisation de la première étape ; toutefois, la première étape peut être réalisée par exemple par un autre procédé de prototypage ou par un procédé d'usinage.

L'intérêt de la réalisation par fusion laser du renfort par une pluralité de secteurs indépendants permet de limiter les contraintes emmagasinées dans la pièce lors du procédé de fabrication par fusion laser et ainsi la déformation des flancs à parois mince lors du retrait de la pièce de l'outillage. En effet, le renfort comporte des flancs à parois minces qui tendent à se déformer lors du retrait de la pièce de l'outillage plus la taille de la pièce est importante.

Le procédé de réalisation d'un renfort métallique selon l'invention s'intègre parfaitement dans un procédé global de réparation d'une aube de turbomachine composite ou métallique. Le procédé de réparation d'une aube de turbomachine ne faisant pas partie des revendications consiste alors en :
- une première étape de désolidarisation du renfort métallique usagé par des moyens de pyrolyse permettant de chauffer la colle ou la résine à une température de l'ordre de 100 à 400°C afin de ramollir et/ou détériorer la colle utilisée pour solidariser le renfort métallique sur l'aube de turbomachine ;
- une seconde étape de réalisation d'un nouveau renfort métallique selon l'invention ;
- et enfin une troisième étape de solidarisation du renfort métallique, réalisée lors de l'étape précédente, par collage au moyen d'une colle connue de l'homme du métier pour coller un renfort sur une aube, comme par exemple une colle cyanoacrylique ou encore une colle époxy.

Les autres avantages de l'invention sont notamment les suivants :
- réduction des coûts de réalisation ;
- réduction du temps de réalisation ;
- simplification de la gamme de fabrication ;
- réduction des coûts matière.

## Revendications

1. Procédé de réalisation d'un renfort métallique (30) de bord d'attaque ou de bord de fuite d'aube (10) de turbomachine comportant un pied (32) et une tête (34) de renfort à partir d'une pluralité d'éléments (30a, 30b, 30c, 30d) formant différents secteurs dudit renfort métallique (30) de sorte que ledit renfort métallique (30) est divisé en plusieurs secteurs répartis entre ledit pied (32) et ladite tête (34), ledit procédé étant **caractérisé en ce qu'**il comporte successivement :
- une étape (110) de réalisation d'une pluralité d'éléments (30a, 30b, 30c, 30d) effilés en forme de V ;
- une étape de positionnement (120) desdits secteurs (30a, 30b, 30c, 30d) sur un outillage (40) reprenant la forme dudit bord d'attaque ou dudit bord de fuite de ladite aube (10) de turbomachine ;
- une étape (130) de solidarisation des différents secteurs de façon à former ledit profil complet dudit renfort métallique (30) monobloc par recombinaison des différents secteurs (30a, 30b, 30c, 30d).

2. Procédé de réalisation d'un renfort métallique (30) d'aube de turbomachine selon la revendication 1 **caractérisé en ce que** lors de ladite étape (110) de réalisation d'une pluralité d'éléments formant lesdits secteurs (30a, 30b, 30c, 30d) dudit renfort métallique (30), chaque secteur (30a, 30b, 30c, 30d) est réalisé au moyen d'un procédé de fusion laser.

3. Procédé de réalisation d'un renfort métallique (30) d'aube de turbomachine selon l'une des revendications 1 à 2 **caractérisé en ce que** ladite étape (130) de solidarisation des différents secteurs (30a, 30b, 30c, 30d) est réalisée au moyen d'un procédé de brasage diffusion.

4. Procédé de réalisation d'un renfort métallique (30) d'aube de turbomachine selon la revendication 3 **caractérisé en ce qu'**il comporte une étape (140) de conformation à chaud réalisée simultanément avec ladite étape de solidarisation (130).

5. Procédé de réalisation d'un renfort métallique (30) d'aube de turbomachine selon l'une des revendications 3 à 4 **caractérisé en ce qu'**il comporte une étape de démoulage (150) dudit renfort métallique (30) dudit outillage (40), ledit outillage (40) étant formé par une pluralité de sections amovibles (40a, 40b, 40c, 40d, 40e, 40f), ledit démoulage étant opéré par le retrait successif desdites sections amovibles (40a, 40b, 40c, 40d, 40e, 40f).

6. Procédé de réalisation d'un renfort métallique (30) d'aube de turbomachine selon la revendication 5 **caractérisé en ce qu'**il comporte une étape (160) de finition dudit renfort métallique (30) consistant en une sous-étape de polissage de la surface dudit renfort et/ou en une sous-étape de reprise des flancs (35, 37) dudit renfort (30).

7. Procédé de réalisation d'un renfort métallique (30) d'aube de turbomachine selon l'une des revendications 1 à 2 **caractérisé en ce que** ladite étape (130) de solidarisation des différents secteurs (30a, 30b, 30c, 30d) est réalisée au moyen d'un procédé de soudage.

8. Procédé de réalisation d'un renfort métallique (30) d'aube de turbomachine selon la revendication 7 **caractérisé en ce que** ladite étape (130) de solidarisation des différents secteurs (30a, 30b, 30c, 30d) est suivie successivement par :
- une étape de positionnement desdits secteurs (30a, 30b, 30c, 30d) solidarisés formant ledit renfort sur un outillage reprenant la forme dudit bord d'attaque (31) ou dudit bord de fuite de ladite aube (10) de turbomachine ;
- une étape de traitement thermique de relaxation des contraintes ;
- une étape de conformation à chaud ;
- une étape de démoulage dudit renfort métallique (30) dudit outillage, ledit outillage étant formé par une pluralité de sections amovibles réparties entre ledit pied (32) et ladite tête (34) dudit renfort ;
- une étape de finition dudit renfort métallique (30) consistant en une sous-étape de polissage de la surface dudit renfort (30) et/ou en une sous-étape de reprise des flancs (35, 37) dudit renfort (30).

9. Procédé de réparation d'une aube de turbomachine comportant un renfort métallique usagé du bord d'attaque ou du bord de fuite de ladite aube, ledit procédé comportant :
- une étape de désolidarisation dudit renfort métallique usagé de ladite aube ;
- une étape de réalisation d'un renfort métallique (30) de bord d'attaque ou de bord de fuite d'aube (10) de turbomachine selon l'une des revendications 1 à 8,
- une étape de solidarisation dudit renfort métallique (30), réalisé lors de l'étape précédente, sur ladite aube (10) de turbomachine.

10. Outillage (40) pour la mise en oeuvre du procédé de réalisation d'un renfort métallique (30) d'aube de turbomachine selon l'une des revendications 1 à 9 **caractérisé en ce que** ledit outillage (60) est formé par une pluralité de sections amovibles (40a, 40b, 40c, 40d, 40e, 40f), le nombre de sections amovibles (40a, 40b, 40c, 40d, 40e, 40f) étant supérieur au nombre de secteurs (30a, 30b, 30c, 30d) du renfort (30).

11. Outillage (40) selon la revendication 10 **caractérisé en ce que** ledit outillage (60) est réalisé dans un matériau comportant un coefficient de dilatation supérieur au coefficient de dilatation du matériau dudit renfort (30).

## Patentansprüche

1. Realisierungsverfahren einer Metallverstärkung (30) einer Stirnkante oder Austrittskante eines Rotorblattes (10) eines Turbinentriebwerks, umfassend einen Fuß (32) und einen Kopf (34) zur Verstärkung ausgehend von einer Vielzahl von Elementen (30a, 30b, 30c, 30d), die unterschiedliche Sektoren der genannten Metallverstärkung (30) derart bilden, dass die genannte Metallverstärkung (30) in mehrere Sektoren unterteilt ist, die zwischen dem linken Fuß (32) und dem genannten Kopf (34) verteilt sind, wobei das genannte Verfahren **dadurch gekennzeichnet ist, dass** es sukzessive umfasst:
- einen Realisierungsschritt (110) einer Vielzahl von verjüngten, V-förmigen Elementen (30a, 30b, 30c, 30d);
- eine Positionierungsstufe (120) der genannten Sektoren (30a, 30b, 30c, 30d) auf einem Werkzeug (40), das die Form der genannten Stirnkante oder der genannten Austrittskante des genannten Rotorblattes (10) des Turbinentriebwerks übernimmt;
- einen festen Befestigungsschritt (130) der unterschiedlichen Sektoren derart, dass das genannte komplette Profil der genannten Metallverstärkung (30) aus einem Block per Rekombination der unterschiedlichen Sektoren (30a, 30b, 30c, 30d) gebildet wird.

2. Realisierungsverfahren einer Metallverstärkung (30) eines Rotorblattes (10) eines Turbinentriebwerks gemäß Anspruch 1, **dadurch gekennzeichnet, dass** bei dem genannten Realisierungsschritt (110) einer Vielzahl von Elementen, die die genannten Sektoren (30a, 30b, 30c, 30d) der genannten Metallverstärkung (30) bilden, jeder Sektor (30a, 30b, 30c, 30d) mittels eines Laserverschmelzungsprozesses realisiert ist.

3. Realisierungsverfahren einer Metallverstärkung (30) eines Rotorblattes eines Turbinentriebwerks gemäß Anspruch 1 bis 2, **dadurch gekennzeichnet, dass** der genannte feste Befestigungsschritt (130) der unterschiedlichen Sektoren (30a, 30b, 30c, 30d) mittels eines Diffusionslötverfahrens realisiert ist

4. Realisierungsverfahren einer Metallverstärkung (30) eines Rotorblattes eines Turbinentriebwerks gemäß Anspruch 3, **dadurch gekennzeichnet, dass** es einen Heißanpassungsschritt (140) umfasst, der gleichzeitig mit dem genannten festen Befestigungsschritt (130) realisiert wird.

5. Realisierungsverfahren einer Metallverstärkung (30) eines Rotorblattes eines Turbinentriebwerks gemäß Anspruch 3 bis 4, **dadurch gekennzeichnet, dass** es einen Entformungsschritt (150) der genannten Metallverstärkung (30) des genannten Werkzeugs (40) umfasst, wobei das genannte Werkzeug (40) durch eine Vielzahl von abnehmbaren Abschnitten (40a, 40b, 40c, 40d, 40e, 40f) gebildet ist, wobei das genannte Entformen durch das sukzessive Entfernen der genannten abnehmbaren Abschnitte (40a, 40b, 40c, 40d, 40e, 40f) durchgeführt ist.

6. Realisierungsverfahren einer Metallverstärkung (30) eines Rotorblattes eines Turbinentriebwerks gemäß Anspruch 5, **dadurch gekennzeichnet, dass** es einen Endbearbeitungsschritt (160) der genannten Metallverstärkung (30) umfasst, der in einem Polier-Unterschritt der Oberfläche der genannten Verstärkung und / oder in einem Unterschritt einer Nachbearbeitung der Flanken (35, 37) der genannten Verstärkung (30) besteht.

7. Realisierungsverfahren einer Metallverstärkung (30) eines Rotorblattes eines Turbinentriebwerks gemäß Anspruch 1 bis 2, **dadurch gekennzeichnet, dass** der genannte feste Befestigungsschritt (130) der unterschiedlichen Sektoren (30a, 30b, 30c, 30d) mittels eines Schweißverfahrens realisiert ist.

8. Realisierungsverfahren einer Metallverstärkung (30) eines Rotorblattes eines Turbinentriebwerks gemäß Anspruch 7, **dadurch gekennzeichnet, dass** auf den genannten festen Befestigungsschritt (130) der unterschiedlichen Sektoren (30a, 30b, 30c, 30d) sukzessive folgen:
- ein Positionierungsschritt der genannten fest befestigten Sektoren (30a, 30b, 30c, 30d), die die genannte Verstärkung auf einem Werkzeug bilden, das die Form der genannten Stirnkante (31) oder der genannten Hinterkante des genannten Rotorblattes (10) des Turbinentriebwerks übernimmt;
- ein thermischer Bearbeitungsschritt zur Lösung der Spannungen;
- ein Heißanpassungsschritt;
- ein Entformungsschritt der genannten Metallverstärkung (30) des genannten Werkzeugs, wobei das genannte Werkzeug durch eine Vielzahl von abnehmbaren Abschnitten gebildet ist, die zwischen dem genannten Fuß (32) und dem genannten Kopf (34) der genannten Verstärkung verteilt sind;
- ein Endbearbeitungsschritt der genannten Metallverstärkung (30), der aus einem Polier-Unterschritt der Oberfläche der genannten Verstärkung (30) und / oder einem Unterschritt der Nachbearbeitung der Flanken (35, 37) der genannten Verstärkung (30) besteht.

9. Reparaturverfahren eines Rotorblattes eines Turbinentriebwerks, umfassend eine gebrauchte Metallverstärkung der Stirnkante oder der Hinterkante des genannten Rotorblattes, wobei das genannte Verfahren umfasst:
- einen Lösungsschritt der genannten gebrauchten Metallverstärkung des genannten Rotorblattes;
- einen Realisierungsschritt einer Metallverstärkung (30) einer Stirnkante oder Hinterkante eins Rotorblattes (10) eines Turbinentriebwerks gemäß Anspruch 1 bis 8,
- einen festen Befestigungsschritt der genannten Metallverstärkung (30), die bei dem voranstehenden Schritt auf dem genannten Rotorblatt (10) des Turbinentriebwerks realisiert ist.

10. Werkzeug (40) für die Umsetzung des Realisierungsverfahrens einer Metallverstärkung (30) eines Rotorblattes eines Turbinentriebwerks gemäß Anspruch 1 bis 9, **dadurch gekennzeichnet, dass** das genannte Werkzeug (60) von einer Vielzahl von abnehmbaren Abschnitten (40a, 40b, 40c, 40d, 40e, 40f) gebildet ist, wobei die Anzahl der abnehmbaren Abschnitte (40a, 40b, 40c 40d, 40e, 40f) höher ist als die Anzahl der Sektoren (30a, 30b, 30c, 30d) der Verstärkung (30).

11. Werkzeug (40) gemäß Anspruch 10, **dadurch gekennzeichnet, dass** das genannte Werkzeug (60) aus einem Material realisiert ist, das einen höheren Ausdehnungskoeffizienten hat als den Ausdehnungskoeffizienten des Materials der genannten Verstärkung (30) hat.

## Claims

1. A method for making a metallic reinforcement (30) for a leading edge of or a trailing edge of a turbomachine blade (10) including a reinforcement root (32) and a reinforcement head (34) from a plurality of elements (30a, 30b, 30c, 30d) forming different sectors of said metallic reinforcement (30) so that said metallic reinforcement (30) is divided into several sectors distributed between said root (32) and said head (34), said method being **characterised in that** it successively includes:
- a step (110) of making a plurality of V-shape tapered elements (30a, 30b, 30c, 30d);
- a step of positioning (120) said sectors (30a, 30b, 30c, 30d) on a tool (40) having the shape of said leading edge or said trailing edge of said turbomachine blade (10);
- a step (130) of uniting the different sectors so as to form said complete profile of said metallic reinforcement (30) in one piece by recombining the different sectors (30a, 30b, 30c, 30d).

2. The method for making a metallic reinforcement (30) of a turbomachine blade according to claim 1, **characterised in that**, during said step (110) of making a plurality of elements forming said sectors (30a, 30b, 30c, 30d) of said metallic reinforcement (30), each sector (30a, 30b, 30c, 30d) is made by means of a laser fusion method.

3. The method for making a metallic reinforcement (30) of a turbomachine blade according to one of claims 1 to 2, **characterised in that** said step (130) of uniting the different sectors (30a, 30b, 30c, 30d) is made by means of a diffusion brazing method.

4. The method for making a metallic reinforcement (30) of a turbomachine blade according to claim 3, **characterised in that** it includes a step (140) of hot conformation simultaneously made with said uniting step (130).

5. The method for making a metallic reinforcement (30) of a turbomachine blade according to one of claims 3 to 4, **characterised in that** it includes a step of stripping (150) said metallic reinforcement (30) from said tool (40), said tool (40) being formed by a plurality of removable sections (40a, 40b, 40c, 40d, 40e, 40f), said stripping being performed by successively removing said removable sections (40a, 40b, 40c, 40d, 40e, 40f).

6. The method for making a metallic reinforcement (30) of a turbomachine blade according to claim 5, **characterised in that** it includes a step (160) of finishing said metallic reinforcement (30) consisting of a sub-step of polishing the surface of said reinforcement and/or of a sub-step of reworking the sides (35, 37) of said reinforcement (30).

7. The method for making a metallic reinforcement (30) of a turbomachine blade according to one of claims 1 to 2, **characterised in that** said step (130) of uniting the different sectors (30a, 30b, 30c, 30d) is made by means of a welding method.

8. The method for making a metallic reinforcement (30) of a turbomachine blade according to claim 7, **characterised in that** said step (130) of uniting the different sectors (30a, 30b, 30c, 30d) is successively followed by:
- a step of positioning said united sectors (30a, 30b, 30c, 30d) forming said reinforcement on a tool having the shape of said leading edge (31) or said trailing edge of said turbomachine blade (10);
- a step of heat treatment for relieving the stresses;
- a step of hot conformation;
- a step of stripping said metallic reinforcement (30) from said tool, said tool being formed by a plurality of removable sections distributed between said root (32) and said head (34) of said reinforcement;
- a step of finishing said metallic reinforcement (30) consisting of a sub-step of polishing the surface of said reinforcement (30) and/or of a sub-step of reworking the sizes (35, 37) of said reinforcement (30).

9. A method for repairing a turbomachine blade including a used metallic reinforcement of the leading edge or the trailing edge of said blade, said method including:
- a step of uncoupling said used metallic reinforcement from said blade;
- a step of making a metallic reinforcement (30) for a leading edge or a trailing edge of a turbomachine blade (10) according to one of claims 1 to 8,
- a step of fixing said metallic reinforcement (30), made during the previous step, on said turbomachine blade (10).

10. A tool (40) for implementing the method for making a metallic reinforcement (30) of a turbomachine blade according to one of claims 1 to 9, **characterised in that** said tool (60) is formed by a plurality of removable sections (40a, 40b, 40c, 40d, 40e, 40f), the number of removable sections (40a, 40b, 40c, 40d, 40e, 40f) being greater than the number of sectors (30a, 30b, 30c, 30d) of the reinforcement (30).

11. The tool (40) according to claim 10, **characterised in that** said tool (60) is made of a material having a coefficient of expansion greater than the coefficient of expansion of the material of said reinforcement (30).
